# FASCICULE DE BREVET EUROPEEN

(11) **EP 2 510 284 B1**
(45) Date de publication et mention de la délivrance du brevet: **29.08.2018**
(21) Numéro de dépôt: 10807456.8
(22) Date de dépôt: 02.12.2010
(51) Int. Cl.: F23R 3/00, F23R 3/50

(54) **CHAMBRE DE COMBUSTION POUR TURBOMACHINE**
BRENNKAMMER FÜR EINEN TURBINENMOTOR
TURBINE ENGINE COMBUSTION CHAMBER

(30) Priorité: 11.12.2009 FR 0906009
(43) Date de publication de la demande: 17.10.2012
(73) Titulaire: Safran Aircraft Engines, 75015 Paris (FR)
(72) Inventeur: BERDOU, Caroline, Jacqueline, Denise, 77550 Moissy Cramayel Cedex (FR); CAMERIANO, Laurent, Bernard, 77550 Moissy Cramayel Cedex (FR)
(74) Mandataire: Pichat, Thierry
(86) Numéro de dépôt international: PCT/FR2010/052600
(87) Numéro de publication internationale: WO 2011/070273

(56) Documents cités:
- EP-A2- 1 329 669
- FR-A1- 2 588 044
- GB-A- 2 131 540
- US-A- 4 206 865

## Description

La présente invention concerne une chambre de combustion pour une turbomachine telle qu'un turboréacteur ou un turbopropulseur d'avion.

Une telle chambre de combustion comprend des parois de révolution coaxiales qui s'étendent l'une à l'intérieur de l'autre et qui sont reliées à leurs extrémités amont par une paroi annulaire de fond de chambre comportant des ouvertures d'alimentation en air et des moyens d'amenée de carburant comportant notamment des injecteurs.

Les parois interne et externe de la chambre comportent des orifices d'entrée d'air primaire et d'air de dilution, et des zones présentant des multiperforations pour le passage d'air de refroidissement.

Afin de mieux résister aux températures extrêmes, il est connu de monter des barrières thermiques sur les parois de la chambre de combustion, ces barrières se présentant sous la forme d'épaisseurs de matériau supplémentaires apposées contre les parois concernées.

Le document JP 6167245 décrit une chambre de combustion dont la paroi interne présente une épaisseur constante et est recouverte d'une barrière thermique d'épaisseur variable.

Le document GB2131540 décrit une chambre de combustion pour turbomachine selon le préambule de la revendication 1.

L'utilisation d'une barrière thermique augmente la résistance de la chambre aux températures élevées, mais augmente son poids.

Afin de répondre aux exigences du marché, il est nécessaire de réduire le poids de la chambre de combustion. Toutefois, la durée de vie de la chambre de combustion ne doit pas être diminuée. En particulier, les parois doivent être dimensionnées de façon à résister à l'endommagement en fluage. On rappelle que le fluage est la déformation irréversible d'un matériau soumis à une contrainte constante pendant une durée suffisante. Cette déformation est accentuée par les températures élevées auxquelles sont soumises les parois de la chambre de combustion.

L'invention a notamment pour but d'apporter une solution simple, efficace et économique à ce problème.

A cet effet, elle propose une chambre de combustion pour turbomachine telle qu'un turboréacteur ou un turbopropulseur d'avion, comportant des parois annulaires interne et externe de révolution, reliées par une paroi annulaire de fond de chambre, caractérisée en ce que sa paroi interne est constituée d'une seule épaisseur de matériau dont l'épaisseur et/ou la nature varie le long de l'axe longitudinal et de la direction circonférentielle de ladite paroi tandis que sa paroi annulaire externe présente une épaisseur sensiblement constante et un matériau de nature également constante. L'invention permet d'augmenter la résistance de la chambre de combustion aux températures extrêmes sans utiliser de barrières thermiques et sans augmenter la masse, en modifiant localement l'épaisseur et/ou la nature du matériau des parois de la chambre.

La paroi annulaire externe est généralement moins chaude que la paroi annulaire interne et ne nécessite donc pas d'adaptation particulière de sa structure.

Selon une forme de réalisation de l'invention, la paroi interne de la chambre de combustion, constituée d'une seule épaisseur de matériau, comporte au moins une zone dite chaude à fort gradient thermique, de plus forte épaisseur, et au moins une zone dite froide à plus faible gradient thermique, de plus faible épaisseur.

Les zones « chaudes » étant les zones soumises aux plus forts gradients thermiques, il est avantageux d'augmenter leur épaisseur.

Selon une autre caractéristique de l'invention, la paroi interne de la chambre de combustion, constituée d'une seule épaisseur de matériau, présente au moins deux zones adjacentes constituées de matériaux différents.

Comme indiqué précédemment, il est ainsi possible d'utiliser localement un matériau plus résistant, dans les zones les plus chaudes ou les zones soumises aux gradients thermiques les plus élevés, et un matériau moins résistant et plus léger, dans les zones les plus froides ou les zones soumises aux gradients thermiques les plus faibles.

De façon préférée, la paroi interne de la chambre de combustion, d'épaisseur variable, est réalisée par usinage.

L'usinage permet d'obtenir des tolérances dimensionnelles plus faibles que celles du formage de tôles classiquement utilisé pour la réalisation de chambres de combustion.

D'autre part, l'usinage permet de faire varier l'épaisseur de la paroi interne, à la fois suivant l'axe longitudinal et suivant une direction circonférentielle.

En variante, la paroi interne de la chambre de combustion, d'épaisseur variable, est réalisée par étirage et formage de tôle.

Cette méthode est plus simple et moins coûteuse que l'usinage.

Les zones d'épaisseur et/ou de nature variable de la paroi interne de la chambre de combustion comprennent au moins l'une des zones faisant partie du groupe comprenant les zones situées entre les injecteurs, les zones comprenant des trous d'air primaire et d'air de dilution, les zones comportant des brides annulaires de fixation, et les zones comportant des mutiperforations.

L'invention concerne en outre une turbomachine, telle qu'un turboréacteur ou un turbopropulseur d'avion, comportant une chambre de combustion du type décrit ci-dessus.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une demi-vue schématique en coupe axiale d'une chambre annulaire de combustion d'une turbomachine ;
- la figure 2 est une vue en perspective, d'un secteur de la chambre de combustion de la figure 1 ;
- la figure 3 est une vue de détail de l'invention, représentant une section de la paroi annulaire interne de la chambre de combustion de la figure 1.

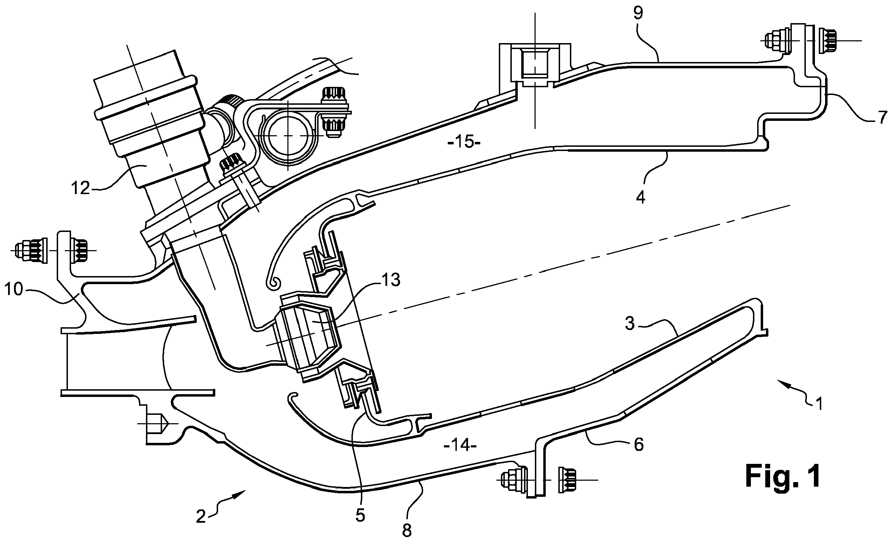

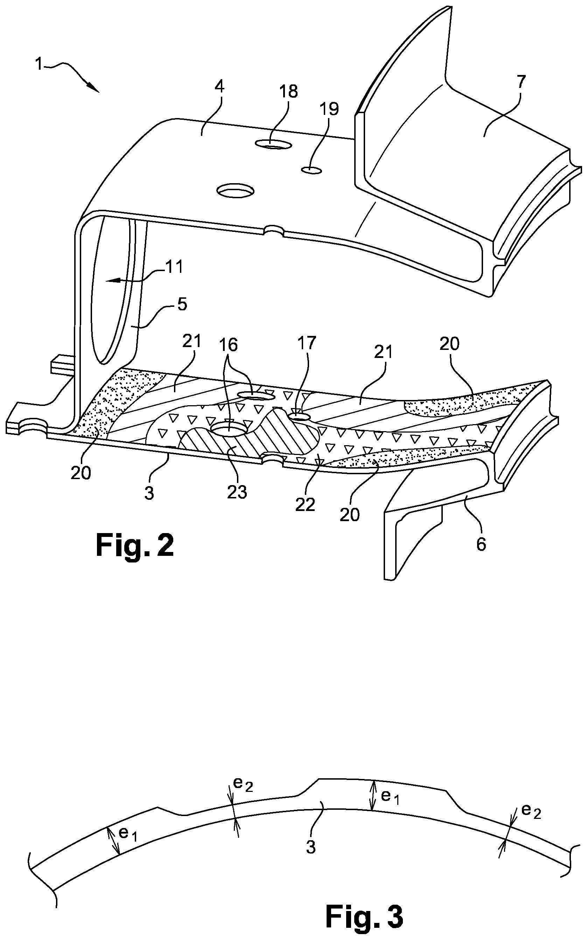

Comme cela est représenté aux figures 1 et 2, une chambre annulaire de combustion de turbomachine 1 est agencée en sortie d'un diffuseur 2, lui-même situé en sortie d'un compresseur (non représenté) et comprend des parois annulaires de révolution interne et externe 3, 4 reliées en amont à une paroi annulaire de fond de chambre 5 et fixées en aval par des brides annulaire interne et externe 6, 7 respectivement sur un voile tronconique interne 8 du diffuseur 2 et sur une extrémité d'un carter externe 9 de la chambre 1, l'extrémité amont de ce carter 9 étant reliée par un voile tronconique externe 10 au diffuseur 2.

La paroi annulaire de fond de chambre 5 comporte des ouvertures 11 (figure 2) à travers lesquelles passe de l'air provenant du diffuseur 2 et qui servent au montage des injecteurs de carburant 12 fixés sur le carter externe 9 et régulièrement répartis sur une circonférence autour de l'axe longitudinal de la chambre. Chaque injecteur 12 comprend une tête d'injection de carburant 13 centrée dans une ouverture 11 de la paroi annulaire 5 et orientée dans l'axe de cette ouverture 11.

Une partie du débit d'air fourni par le compresseur et sortant par le diffuseur 2 passe par les ouvertures 11 et alimente la chambre de combustion, l'autre partie du débit d'air alimentant des canaux annulaires interne et externe 14, 15 de contournement de la chambre de combustion.

Le canal interne 14 est formé entre le voile interne 8 du diffuseur 2 et la paroi interne 3 de la chambre, et l'air qui passe dans ce canal se partage en un débit qui pénètre dans la chambre par des orifices 16, 17 d'air primaire et d'air de dilution (figure 2) de la paroi interne 3 et en un débit qui passe à travers des trous de la bride interne 6 de la chambre 1 pour aller refroidir des composants, non représentés, situés en aval de cette chambre 1.

Le canal externe 15 est formé entre le carter externe 9 et la paroi externe 4 de la chambre 1, et l'air qui passe dans ce canal se partage en un débit qui pénètre dans la chambre par des orifices 18, 19 d'air primaire et d'air de dilution (figure 2) de la paroi externe 4 et en un débit qui passe à travers des trous de la bride externe 7 pour aller refroidir des composants en aval.

Les orifices 16, 18 d'entrée d'air primaire sont régulièrement répartis sur des circonférences des parois interne et externe 3, 4, respectivement, centrées sur l'axe de la chambre 1, et les orifices 17, 19 d'entrée d'air de dilution sont régulièrement répartis sur des circonférences des parois interne et externe 3, 4, respectivement, centrées sur l'axe de la chambre 1 en aval des orifices 16, 18.

Les parois annulaires interne et externe 3, 4 comportent en outre des microperforations (non visibles) pour le passage d'air de refroidissement.

En fonctionnement, les parois annulaires externe et interne 3, 4 présentent des zones ayant des températures différentes, cette hétérogénéité des températures étant représentée schématiquement en figure 2 sous la forme de zones 20, 21, 22, 23, distinctes les unes des autres.

Ce phénomène concerne en particulier la paroi annulaire interne 3. Les zones de températures sont numérotées par valeurs croissantes de température. Ainsi, les zones 20 sont les zones relativement les plus « froides » soumises aux gradients thermiques les plus faibles et la zone 23 est la zone la plus « chaude », soumise aux gradients thermiques les plus élevés. Cette répartition des zones n'est donnée qu'à titre d'exemple et résulte notamment de la structure particulière de la chambre de combustion 1.

La présence et la localisation des différentes zones 20 à 23 peuvent être mises en évidence par simulation par le calcul ou par l'application d'une peinture réagissant à la température et dont la teinte, après fonctionnement de la chambre de combustion, varie localement en fonction de la température.

Selon l'invention, la paroi interne 3 est constituée d'une seule épaisseur de matériau dont l'épaisseur et/ou la nature varie le long de l'axe longitudinal et/ou de la direction circonférentielle de ladite paroi.

Dans l'exemple de réalisation représenté aux figures, on fait varier localement l'épaisseur de la paroi interne, celle-ci comprenant des zones 20 à 23 de températures différentes.

Ainsi, comme illustré à la figure 3, la paroi annulaire interne 3 est constituée d'une seule épaisseur de matériau et comporte des zones de plus forte épaisseur e1 (voir figure 3), par exemple les zones 22 et 23, et des zones de plus faible épaisseur e2, par exemple les zones 20 et 21.

Les zones de plus forte épaisseur sont celles qui, en fonctionnement, sont soumises aux températures les plus élevées, par exemple de l'ordre de 1000 °C. Ces zones ont une épaisseur e1 comprise entre 1 et 2 mm, de préférence de l'ordre de 1,5 mm. A l'inverse, les zones de plus faible épaisseur sont celles qui, en fonctionnement, sont soumises aux températures les plus faibles. Ces zones ont une épaisseur e2 comprise entre 0,5 et 1 mm, de préférence de l'ordre de 1 mm.

La paroi annulaire externe 4 présente quant à elle une épaisseur sensiblement constante, comprise entre 1 et 1,5 mm, de préférence de l'ordre de 1,2 mm.

On peut ainsi, par exemple, en partant d'une chambre de combustion connue dont les parois de révolution ont une épaisseur constante de 1,5 mm, réaliser une chambre de combustion plus légère, ayant une paroi externe de révolution d'épaisseur 1,2 mm et une paroi interne de révolution ayant une épaisseur de 1,5 mm dans les zones chaudes et de 1 mm dans les zones plus froides, la masse de cette chambre étant celle d'une chambre ayant des parois d'une épaisseur constante égale à 1,2 mm.

La chambre de combustion, selon l'invention en particulier, la paroi interne 3 d'épaisseur variable, est réalisée par usinage.

De manière alternative, la paroi interne 3 d'épaisseur variable est réalisée par étirage et formage de tôle.

Selon une forme de réalisation non représentée aux dessins, les zones d'épaisseur variables pourraient être remplacées par ou pourraient comporter des zones de natures différentes, de manière à comporter des zones constituées d'un matériau à haute résistance thermique dans les zones les plus chaudes, et des zones constituées d'un matériau à plus faible résistance thermique mais plus léger dans les zones les plus froides.

De même, les zones de natures différentes peuvent permettre d'éviter la formation de criques, le matériau pouvant être changé localement afin que les zones initialement sollicitées en traction, dans lesquelles peuvent s'initier les criques, soient sollicitées en compression du fait du comportement des zones limitrophes.

Chacune de ces formes de réalisation permet de diminuer le poids de la chambre de combustion tout en améliorant sa résistance thermique et, ainsi, sa durée de vie.

Les zones d'épaisseur et/ou de nature variable de la paroi interne 3 sont notamment les zones situées entre les injecteurs 12, les zones comprenant des trous d'air primaire 16 et d'air de dilution 17, les zones comportant des brides annulaires de fixation 6, et les zones comportant des mutiperforations.

## Revendications

1. Chambre de combustion (1) pour turbomachine telle qu'un turboréacteur ou un turbopropulseur d'avion, comportant des parois annulaires interne et externe (3, 4) de révolution, reliées par une paroi annulaire de fond de chambre (5), **caractérisée en ce que** sa paroi interne (3) est constituée d'une seule épaisseur de matériau dont l'épaisseur (e1, e2) et/ou la nature varie le long de l'axe longitudinal et de la direction circonférentielle de ladite paroi (3) tandis que sa paroi annulaire externe (4) présente une épaisseur sensiblement constante et un matériau de nature constante.

2. Chambre de combustion (1) selon la revendication 1, **caractérisée en ce que** sa paroi interne constituée d'une seule épaisseur de matériau comporte au moins une zone dite chaude (23, 22) à fort gradient thermique, de plus forte épaisseur (e1), et au moins une zone dite froide (21, 20) à plus faible gradient thermique, de plus faible épaisseur (e2).

3. Chambre de combustion (1) selon la revendication 1 ou 2, **caractérisée en ce que** sa paroi interne constituée d'une seule épaisseur de matériau présente au moins deux zones adjacentes constituées de matériaux différents.

4. Chambre de combustion (1) selon l'une des revendications 1 à 3, **caractérisée en ce que** sa paroi interne d'épaisseur variable est réalisée par usinage.

5. Chambre de combustion (1) selon l'une des revendications 1 à 3, **caractérisée en ce que** sa paroi interne d'épaisseur variable est réalisée par étirage et formage de tôle.

6. Chambre de combustion (1) selon l'une des revendications 1 à 5, **caractérisée en ce que** les zones d'épaisseur (e1, e2) et/ou de nature variable de sa paroi interne comprennent au moins l'une des zones faisant partie du groupe comprenant des zones situées entre des injecteurs (12), des zones comprenant des trous d'air primaire (16, 18) et d'air de dilution (17, 19), des zones comportant des brides annulaires de fixation (6, 7), et des zones comportant des multiperforations.

7. Turbomachine, telle qu'un turboréacteur ou un turbopropulseur d'avion, comportant une chambre de combustion (1) selon l'une des revendications 1 à 6.

## Patentansprüche

1. Brennkammer (1) eines Turbotriebwerks, wie etwa eines Turbostrahltriebwerks oder Turboprop-Triebwerks für Flugzeuge, enthaltend ringförmige Rotationswände, nämlich eine innere und eine äußere (3, 4), die über eine ringförmige Kammerbodenwand (5) verbunden sind, **dadurch gekennzeichnet, dass** ihre Innenwand (3) aus einer einzigen Materialstärke besteht, deren Dicke (e1, e2) und/oder Beschaffenheit entlang der Längsachse und der Umfangsrichtung der Wand (3) variiert, während ihre ringförmige Außenwand (4) eine im Wesentlichen konstante Dicke und ein Material konstanter Beschaffenheit aufweist.

2. Brennkammer (1) nach Anspruch 1, **dadurch gekennzeichnet, dass** ihre Innenwand, die aus einer einzigen Materialstärke besteht, zumindest einen sogenannten Warmbereich (23, 22) mit hohem Wärmegradienten und größerer Dicke (e1) und zumindest einen sogenannten Kaltbereich (21, 20) mit geringerem Wärmegradienten und geringerer Dicke (e2) enthält.

3. Brennkammer (1) nach Anspruch 1 oder 2, **dadurch gekennzeichnet, dass** ihre Innenwand, die aus einer einzigen Materialstärke besteht, zumindest zwei aneinandergrenzende Bereiche aufweist, die aus unterschiedlichen Materialien bestehen.

4. Brennkammer (1) nach einem der Ansprüche 1 bis 3, **dadurch gekennzeichnet, dass** ihre Innenwand mit variabler Dicke durch spanende Bearbeitung ausgebildet ist.

5. Brennkammer (1) nach einem der Ansprüche 1 bis 3, **dadurch gekennzeichnet, dass** ihre Innenwand mit variabler Dicke durch Ziehen und Formen aus Blech ausgebildet ist.

6. Brennkammer (1) nach einem der Ansprüche 1 bis 5, **dadurch gekennzeichnet, dass** die Bereiche (e1, e2) ihrer Innenwand mit variabler Dicke und/oder Beschaffenheit zumindest einen der Bereiche umfassen, der zur Gruppe umfassend Bereiche, die zwischen Injektoren (12) liegen, Bereiche mit Primärluftöffnungen (16, 18) und Verdünnungsluftöffnungen (17, 19), Bereiche mit ringförmigen Befestigungsflanschen (6, 7) und Bereiche mit Mehrfachperforationen gehört.

7. Turbotriebwerk, wie etwa Turbostrahltriebwerk oder Turboprop-Triebwerk für Flugzeuge, enthaltend eine Brennkammer (1) nach einem der Ansprüche 1 bis 6.

## Claims

1. A combustion chamber (1) for a turbine engine such as an airplane turboprop or turbojet, the combustion chamber comprising inner and outer annular walls (3, 4) forming bodies of revolution that are connected together by an annular chamber end wall (5), the combustion chamber being **characterized in that** its inner wall (3) is constituted by a single thickness of material that presents a thickness (e1, e2) and/or nature which varies along the longitudinal axis and in the circumferential direction of said wall (3), while its outer annular wall (4) presents a thickness that is substantially constant and a material having a consistent nature.

2. A combustion chamber (1) according to claim 1, **characterized in that** its inner wall that is constituted by a single thickness of material has at least one so called "hot" zone (23, 22) with an important temperature gradient that is of greater thickness (e1), and at least one so called "cool" zone (21, 20) of smaller temperature gradient that is of smaller thickness (e2).

3. A combustion chamber (1) according to claim 1 or claim 2, **characterized in that** its inner wall that is constituted as a single thickness of material presents at least two adjacent zones made of different materials.

4. A combustion chamber (1) according to any one of claims 1 to 3, **characterized in that** its inner wall of varying thickness is made by machining.

5. A combustion chamber (1) according to any one of claims 1 to 3, **characterized in that** its inner wall of varying thickness is made by stretching and forming metal sheet.

6. A combustion chamber (1) according to any one of claims 1 to 5, **characterized in that** the zones of varying thickness (e1, e2) and/or of varying nature of its inner walls comprise one zone forming part of the group comprising the zones situated between the injectors (12), the zones including primary air and dilution air holes (16, 18; 17, 19), the zones including annular fastening flanges (6, 7), and the zones including multiple perforations.

7. A turbine engine such as an airplane turboprop or turbojet, the engine including a combustion chamber (1) according to any one of claims 1 to 6.
